# EUROPÄISCHE PATENTSCHRIFT

(11) **EP 2 403 633 B1**
(45) Veröffentlichungstag und Bekanntmachung des Hinweises auf die Patenterteilung: **17.04.2013**
(21) Anmeldenummer: 10706933.8
(22) Anmeldetag: 23.02.2010
(51) Int. Cl.: B01F 5/06, B01F 3/12, B29B 7/32

(54) **KOAXIALER KOMPAKTSTATIKMISCHER SOWIE DESSEN VERWENDUNG**
COAXIAL COMPACT STATIC MIXER AND USE THEREOF
MÉLANGEUR STATIQUE COMPACT COAXIAL ET SON UTILISATION

(30) Priorität: 06.03.2009 DE 102009011996
(43) Veröffentlichungstag der Anmeldung: 11.01.2012
(73) Patentinhaber: Ehrfeld Mikrotechnik BTS GmbH, 55234 Wendelsheim (DE)
(72) Erfinder: HERBSTRITT, Frank, 55232 Alzey (DE)
(74) Vertreter: Lütjens, Henning
(86) Internationale Anmeldenummer: PCT/EP2010/001104
(87) Internationale Veröffentlichungsnummer: WO 2010/099884

(56) Entgegenhaltungen:
- EP-A1- 0 113 041
- DE-A1- 1 407 515
- GB-A- 900 656
- US-A- 3 051 452

## Beschreibung

Die Erfindung betrifft einen hocheffizienten und skalierbaren Kompaktstatikmischer mit rotationssymmetrischer kaskadierter Mischstruktur sowie dessen Verwendung.

Statische Mischer (oder "Statikmischer") dienen im Allgemeinen der Vermischung bzw. Dispergierung fluider Medien im kontinuierlichen Durchfluss. Sie sind dadurch gekennzeichnet, dass sie keine beweglichen Teile enthalten - die für die Vermischung benötigte Energie wird ausschließlich der Bewegung bzw. dem Druckgefälle der durch den Mischer hindurch fließenden Strömung entnommen. Das oder die zu vermischenden Medien treten dabei zunächst kontinuierlich, entweder getrennt parallel oder in mehr oder weniger definiert vorgemischter oder -laminierter Form, in den Mischer ein. Innerhalb des Mischers erfolgt dann die Vermischung der Gemischkomponenten durch ein- oder mehrfache Teilung, Verschiebung und Wiedervereinigung des Gemischstroms.

Als einstufige Statikmischer können beispielsweise alle Arten von Misch- und Dispergierdüsen oder -Blenden (z.B. solche gemäß US 2,531,547 oder EP 1203036 B1) verstanden werden, bei denen ein Medium unter meist hohem Druck und hoher Geschwindigkeit in ein zweites eingebracht wird und sich in diesem durch Strahlzerfall und/oder Turbulenz fein verteilt. Ferner können alle Arten von Multilaminationsmischern - meist Mikromischer - (z.B. solche gemäß WO 00/76648, EP 1718403 B1 oder WO 2004/052518 A3), bei denen die Vermischung der Eingangsströme durch einmalige Aufteilung in eine Vielzahl von Teilströmen und deren anschließende Zusammenführung in alternierender Anordndung erfolgt, als einstufige Statikmischer aufgefasst werden.

Im engeren Sinne werden allerdings solche Mischer als statische Mischer bezeichnet, bei denen die aktive Vermischung des Prozessmediums bzw. der Prozessmedien in mehreren Schritten bzw. sukzessive über eine gewisse Mischstrecke durch mehr oder weniger gezielt induzierte turbulente und/oder laminare Querströmungen (Turbulenz/Advektion) erfolgt, welche eine wiederholte Teilung, Scherung und/oder Faltung der Strömung bewirken. Diese Querströmungen werden durch definiert eingebrachte Umlenkungen, Aufteilungen und/oder Einbauten in dem als Mischstrecke fungierenden Fluidkanal hervorgerufen bzw. begünstigt. Die verschiedenen Typen von Statikmischern dieser Art unterscheiden sich im Wesentlichen in der Art und Form der Umlenkungen, Aufteilungen bzw. Einbauten in der Mischstrecke. So sind Systeme bekannt, die im Wesentlichen aus einem Rohr mit darin periodisch hintereinander angeordneten Blenden oder Düsen bestehen (z.B. Fig. 18-31 in Perry's Chemical Engineer's Handbook, 7th ed., McGraw Hill, New York (1997)). Sehr weit verbreitet sind insbesondere rohrförmige Systeme mit unterbrochenspiralförmigen Einsätzen (z.B. "Keenics KM Static Mixer" von Chemineer, Inc.), sich in Strömungsrichtung alternierend überkreuzenden Lamellen (z.B. Sulzer SMX, WO 2004/007063 A1, WO 1995/009689 A1 oder EP 1486749 A2) oder wellblechartigen Strukturelementen (z.B. Sulzer SMV). Insbesondere in den letztgenannten zwei Klassen von Statikmischern bewirken die Mischelemente oft nicht nur eine sequenzielle sondern zudem auch eine mehrfach parallele Aufteilung, Verschiebung und Wiedervereinigung des Prozessstroms.

EP 0 113 041 A1 offenbart eine Vorrichtung gemäß dem Oberbegriff des Anspruchs 1 zur Bildung und Umschichtung von Teilströmen von aus oder in einer Strangpresse geförderten Massen, in der der Schmelzestrom in sektorartige Teilströme aufgeteilt und diese in relativ zueinander versetzter Form wieder zusammengeführt werden.

DE 14 07 515 A1 offenbart eine Vorrichtung zum Erzeugen von Grenz-, Zwischen- oder Berührungsflächen in einer flüssigen Masse durch Unterteilen, Neuordnen und Wiedervereinigen eines Stromes der in einer Rohrleitung fließenden flüssigen Masse.

GB 900 656 und US 3,051,452 A offenbaren Vorrichtungen zum Mischen strömender Medien mittels ortsfester Leitelemente, in der die Medien zunächst zu einem Hauptstrom vereinigt werden, der wenigstens zweimal nacheinander in wenigstens zwei Teilströme gespalten wird und die Teilströme nach jeder Spaltung wieder vereinigt werden, wobei die Strömungsachsen der Teilströme in Querrichtung verschoben werden.

Mit kleiner werdenden Rohrquerschnitten wird aus prozesstechnischen (z.B. Druckverlust, Foulinganfälligkeit) wie auch aus fertigungstechnischen Gründen (Feinheit der Mischstrukturen) üblicherweise die Zahl der parallelen Stromteilungen reduziert, so dass man spätestens bei Erreichen von Teilkanalabmessungen deutlich unterhalb eines Millimeters ("Mikromischer") pro Mischstufe meist nur noch eine Aufteilung des Medienstroms auf zwei Teilströme vornimmt, welche dann verschoben oder versetzt wieder zusammengeführt werden (z.B. US 5,904,424, WO 97/13075 und US 6,457,854 B1 sowie in Hessel/Hardt/Löwe, "Chemical Micro Process Engineering", Wiley-VCH, Weinheim (2004), S. 401 "Caterpillar Mini Mixer" - im Folgenden als "Kaskadenmischer" bezeichnet).

Statikmischer zeichnen sich gegenüber dynamisch arbeitenden Rührwerken durch ihren sehr einfachen und kompakten Aufbau aus (keine beweglichen Teile; meist einfache Integration in das Verrohrungssystem einer Anlage). Gegenüber diskontinuierlich arbeitenden Mischern ("Rührkessel") bieten sie ferner mitunter deutliche zusätzliche Vorteile durch ihr geringes Prozessvolumen (kurze Verweilzeit) sowie eine schnellere und energie-effizientere Vermischung. Durch die intensive Quervermischung (schneller Fluidaustausch zwischen Wand- und Kernbereichen), den kompakten Strömungsquerschnitt und ein großes Oberfläche-VolumenVerhältnis der Mischstrecke bieten Statikmischer zudem oft wesentlich günstigere Bedingungen für den Wärmeaustausch des Gemischs mit den Mischwänden als andere Mischsysteme, wodurch sie sich auch für Mischaufgaben mit gleichzeitiger Gemischtemperierung, reine Temperieraufgaben oder als kontinuierlich arbeitende Reaktoren mit permanenter Durchmischung und somit engem Verweilzeitspektrum, z.B. für die Durchführung exothermer oder endothermer (chemischer) Reaktionen, besonders gut eignen.

Intensiviert werden diese Vorteile in vielen Fällen durch Reduktion der charakteristischen Dimensionen (z.B. Kanal-/Mischstrukturabmessungen) der Mischstrecke. Hierdurch werden Diffusionswege für den Stoff- und Wärmetransport reduziert und somit Misch- und Wärmetauschvorgänge mitunter stark beschleunigt. In engen Kanalstrukturen liegen ferner auch über einen sehr breiten Bereich von Strömungsgeschwindigkeiten laminare und damit sehr definierte Strömungsverhältnisse vor, die eine besonders gleichmäßige und gezielte Gemischbildung bei minimiertem Energieeintrag ermöglichen. Übliche charakteristische laterale Mischstrukturdimensionen entsprechender Kleinst- und Mikro-Statikmischer liegen im Bereich weniger Zehntelmillimeter bis ca. 1,5 mm und der Gesamtquerschnitt eines einzelnen Mischkanals ist meist auf Werte von ca. 10 mm² bis hin zu unter 1 mm² beschränkt. Dem entsprechend ist der mögliche Durchsatz eines solchen Kleinst- oder Mikrostatikmischers bei gegebenem eingangsseitigem Förderdruck deutlich limitiert. So überschreiten übliche Massenströme, welche in derartigen Mischern vermischt werden, selten Werte von einigen 10 kg/h und decken damit für die meisten Anwendungen bestenfalls den Produktdurchsatz im Labor- und Technikumsmaßstab ab.

Um höhere Mediendurchsätze zu realisieren, ohne die spezifischen Vorteile eines (ggf. im Labormaßstab optimierten) Kleinst- bzw. Mikrostatikmischers wieder zu verlieren, ist es nahe liegende Praxis, mehrere identische Mischstrukturen (Kanäle) parallel zu schalten. Da die Vermischung in jeder einzelnen dieser Mischstrukturen stofflich getrennt von derjenigen in den anderen Mischstrukturen abläuft, ist es in diesem Fall notwendig, die zu vermischenden Komponenten am Eingang jeder einzelnen der individuellen parallelen Mischstrukturen mit dem jeweils selben Mengenverhältnis (Massenstromverhältnis) einzuspeisen. Eine hinreichend gute Gleichverteilung der Medienströme ist aufgrund der fertigungs- und prozessbedingten Durckverlustvariationen zwischen den einzelnen Mischstrukturen dabei fast immer mit zusätzlichem technischen Aufwand verbunden. So werden im einfachsten Fall als zusätzliche Elemente z.B. Drosselblenden oder Kanalstrukturen mit sehr präzise definiertem Druckabfall in das Fluidverteilungssystem vor den Mischstrukturen eingebracht, in anspruchsvolleren Fällen kann es sogar notwendig sein, jede Mischstruktur mit einem individuellen Massenstromregler zu versehen. In jedem Fall generieren diese zusätzlichen Elemente neben erhöhten Kosten einen oft nicht unerheblichen zusätzlichen Druckverlust und erhöhen die Anfälligkeit des Mischersystems gegenüber Verstopfungen und anderen möglichen Fehlerursachen.

Neben dem Mengenstromverhältnis kann insbesondere bei Kleinst- und Mikrostatikmischem auch das Strömungsbild am Eingang der einzelnen Mischstruktur signifikanten Einfluss auf das Mischergebnis haben. So wird beispielsweise bei Einspeisung eines laminaren Stromes zweier Eduktmedien in einen Kaskadenmischer nur dann ein gutes Mischergebnis bis zum Ende der Mischstrecke erreicht, wenn die anfängliche Trennebene zwischen den Eduktmedien weitest gehend senkrecht zur ersten Teilungsebene im Mischer liegt. Diesem Umstand ist bei der Parallelschaltung mehrerer identischer Mischstrukturen ggf. ebenfalls Rechnung zu tragen.

Vor dem Hintergrund dieser Problematik stellt sich daher die Aufgabe, einen Statikmischer zu beschreiben, der nach einfachen Prinzipien und mit geringem technischen Aufwand über einen breiten Mengestrombereich skaliert werden kann, ohne die charakteristischen Dimensionen seiner Mischstrukturen zu variieren und zusätzliche Druckverlust verursachende Elemente zu erfordern. Die Aufgabe wird überraschenderweise gelöst durch den im Folgenden beschriebenen Statikmischer.

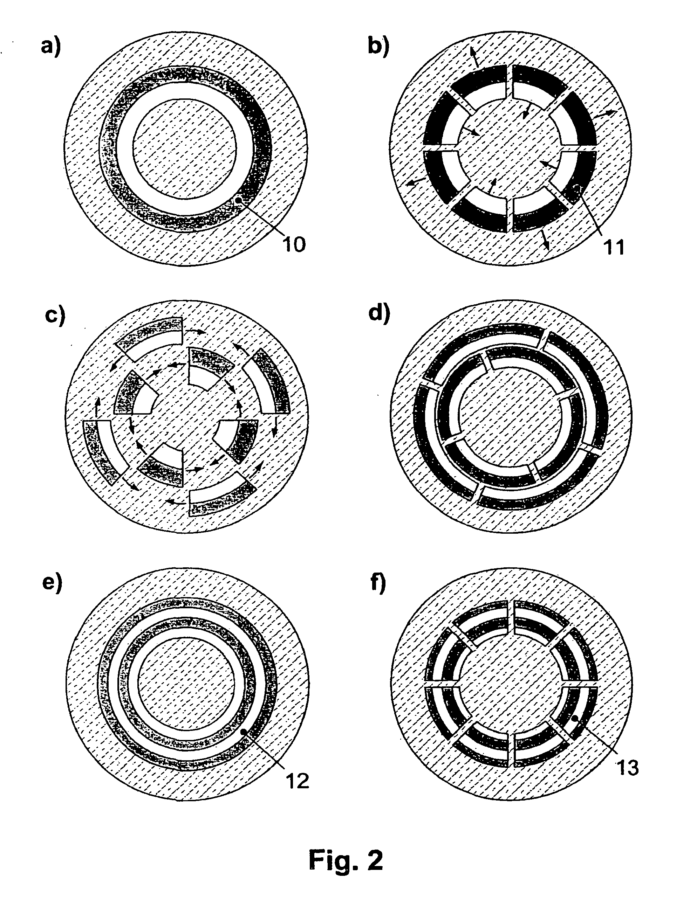

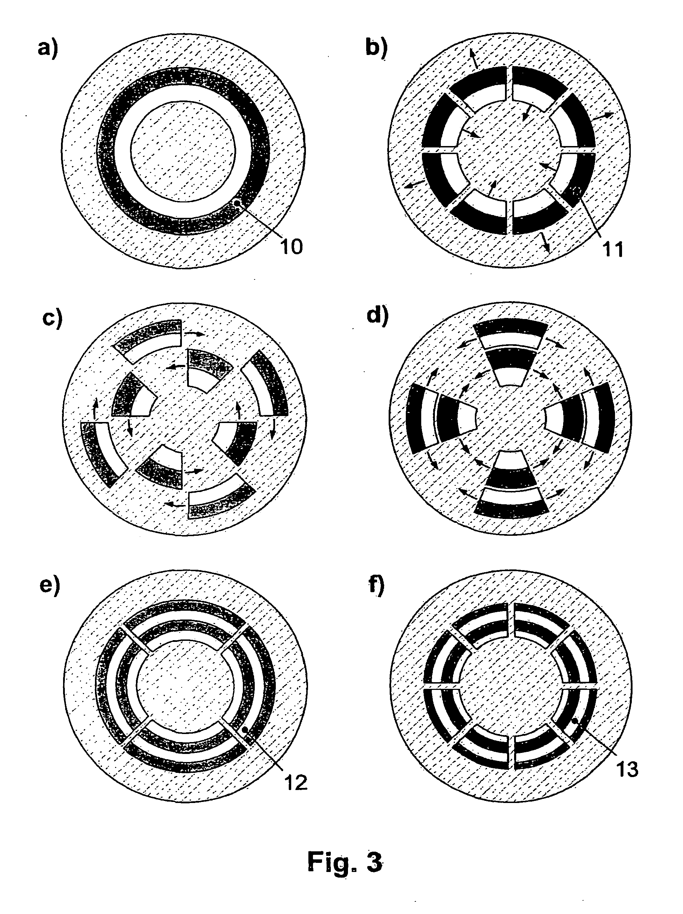

Gegenstand der Erfindung ist daher ein Statischer Mischen gemäß Anspruch 1, umfassend eine vom fluiden Mischgut sequenziell durchströmte koaxiale Anordnung von mehreren Mischstufen, jede einzelne davon enthaltend einen ggf. azimutal segmentierten Ringkanal, der jeweils in eine gerade Anzahl annähernd gleich großer Teilkanäle übergeht, welche entlang der Strömungsrichtung zunächst einen alternierenden radialen Versatz durchlaufen bis benachbarte Teilkanäle radial nicht mehr überlappen, dann durch azimutale Verschiebung und/oder Verbreiterung zu radial ineinander geschachtelten, ggf. azimutal segmentierten Ringkanälen ausgezogen werden, welche schließlich am Ende der jeweiligen Mischstufe durch radiale Verschmelzung wieder zu einem ggf. azimutal segmentierten Ringkanal zusammen laufen (s. Figuren 2 und 3).

Als fluide Medien (Mischgut) im Sinne der Erfindung werden homogene Flüssigkeiten und Gase (auch Lösungen und Stoffe in der überkritischen Phase) ebenso wie fließfähige (ggf. auch strukturviskose) mehrphasige Gemische, z.B. Suspensionen, Emulsionen, Gas-flüssig-Gemische in jeglichem Mischungsverhältnis und jeder möglichen Strömungsform verstanden.

Durch die gegenseitige azimutale Verschiebung der Teilkanäle innerhalb der Mischstufen wird erreicht, dass zwischen jeweils benachbarten Kanälen ein Stoffaustausch stattfindet. Über eine zunehmende Anzahl von Mischstufen hinweg kommuniziert dadurch jeder Teilkanal mit einer zunehmenden Anzahl von Nachbarn höherer Ordnung, womit evtl. am Eintritt zu ersten Mischstufe entlang des Umfangs vorliegende Schwankungen im Mischungsverhältnis sukzessive ausgeglichen werden. Auch lokale Störungen, wie sie z.B. durch Ablagerungen oder Verstopfungen in einzelnen Teilkanälen verursacht werden, wirken sich hierdurch weitaus weniger auf den Druckabfall und das Mischergcbnis aus, als dies bei paralleler Führung getrennter Mischkanäle der Fall wäre. Die ringförmige Anordnung der Teilkanäle entlang der Mischstrecke sorgt dabei dafür, dass es keine Randzonen gibt, an denen der transversale Stofffluss unterbrochen würde. Sie begünstigt zudem eine sehr kompakte und druckstabile Bauweise des Mischers in einem zylindrischen Rohrmantel. Nach Durchlaufen einer Anzahl von Mischstufen, die etwa der halben Anzahl von Teilkanälen pro Mischstufe entspricht, hat jeder Teilkanal mit jedem anderen unmittelbaren oder mittelbaren Stoffaustausch gehabt. Ein besonders guter Ausgleich anfänglicher azimutaler Variationen im Mischungsverhältnis wird folglich erreicht, wenn die Anzahl der Mischstufen wenigstens der halben Anzahl von Teilkanälen innerhalb der (ersten) Mischstufen entspricht.

Der Ringkanal am Ein- und Ausgang jeder Mischstufe kann in azimutaler Richtung sowohl durchgehend als auch von vornherein in Teilkanäle unterteilt (segmentiert) ausgeführt sein. Im Falle einer segmentierten Ausführung liegen die Teilkanäle zumindest in einer ringförmigen Anordnung um eine gemeinsame Achse in dem Sinne, dass die Mittelpunkte ihrer Querschnitte in wenigstens einer Querschnittsebene jeder Mischstufe in etwa auf einem Kreis liegen. Die Kanalbegrenzungen, durch welche die Unterteilung zustand kommt, sind dabei vorzugsweise in azimutaler Richtung deutlich (um wenigstens Faktor 0,5) schmaler als die Teilkanäle selbst. Im Falle einer segmentierten Ausführung ist es im allgemeinen vorteilhaft, wenn die Teilkanäle beim Übergang von einer Mischstufe in die darauf folgende ohne Versatz oder Stufen fortgeführt werden, womit insbesondere die Anzahl der Kanalsegmente in aufeinender folgenden Mischstufen gleich sein sollte.

Der in azimutaler Richtung alternierende radiale Versatz der Teilkanäle innerhalb der Mischstufen kann ausschließlich durch Führung jedes zweiten Teilkanals zur Mischerachse hin oder von dieser weg wie auch durch simultane (alternierende) Variation des radialen Versatzes benachbarter Teilkanäle realisiert werden. Am Ende der Versatzstrecke muss jedoch die innere Begrenzungsfläche der weiter außen liegenden Teilkanäle einen mindestens so großen oder größeren Abstand zur Mischerachse aufweisen als die äußere Begrenzungsfläche der weiter innen liegenden Teilkanäle.

Der Übergang der innerhalb einer Mischstufe durch alternierenden radialen Versatz abwechselnd auf zwei radiale Ebenen verteilten Teilkanäle zu zwei konzentrischen, ggf. bis zum Ende der Mischstufe durchgängig azimutal segmentierten Ringkanälen erfolgt durch azimutale Verbreiterung der Teilkanäle entlang des Strömungsverlaufs, der ein - bevorzugt zwischen den beiden Ebenen gegenläufiger - azimutaler Versatz der Teilkanäle vorgeschaltet oder überlagert sein kann. Vorzugsweise ist der azimutalen Verbreiterung der Teilkanäle dabei eine simultane radiale Verjüngung überlagert. Besonders bevorzugt wird durch diese simultane Änderung der azimutalen und radialen Ausdehnung der Teilkanäle deren Querschnitt entlang des Strömungsverlaufs wenigstens annähernd konstant gehalten.

In gewissen Fällen, insbesondere wenn im Verlauf der Vermischung die Viskosität des Gemischs (zumindest gegenüber einer seiner Ausgangskomponenten) signifikant abnimmt, kann es im Gegensatz zu der allgemein als vorteilhaft eingestuften Kontinuität der Segmentierung bzw. Kanalzahl und des Kanalquerschnitts über die verschiedenen Mischstufen hinweg auch vorteilhaft sein, die Anzahl der parallelen Kanäle von einer Mischstufe zu einer darauf folgenden zu steigern und dabei parallel die Abmessungen der Kanäle zu verringern. In diesem Fall erscheint es besonders vorteilhaft, zwischen den aufeinander folgenden Mischstufen mit unterschiedlicher Kanalzahl ein unsegmentiertes Stück Ringkanal in die Mischstrecke einzusetzen oder die Kanalzahl in der stromabwärts gelegenen der beiden Mischstufen gegenüber der stromaufwärts gelegenen um ein ganzzahliges Vielfaches zu erhöhen, so dass sich an jeden Kanal bzw. jedes Kanalsegment aus der stromaufwärts gelegenen Mischstufe eine jeweils gleiche Zahl und Anordnung von stromabwärts gelegenen Kanälen bzw. Segmenten anschließt.

Aufgrund von strömungstechnischen Erwägungen erscheint es vorteilhaft, die transversalen Abmessungen der Teilkanäle in einem Verhältnis kleiner 5, besonders bevorzugt kleiner 2 zueinander zu wählen und die Länge einer einzelnen Mischstufe so auszulegen, dass sie, gemessen in der Hauptströmungsrichtung des Gemischs (diese entspricht in der Regel der Axialrichtung der Mischstrecke), bevorzugt dem Zwei- bis Zehnfachen, besonders bevorzugt dem Drei- bis Sechsfachen der größten radialen Ausdehnung der Teilkanäle entspricht.

Die absoluten Abmessungen der Teilkanäle sowie deren Anzahl innerhalb einer Mischstufe sollten sich bevorzugt an der Mischaufgabe, insbesondere am Gemischdurchsatz, der Viskosität des Gemischs, evtl. der Größe und Menge im Gemisch vorhandener fester Bestandteile und ggf. einer vorgegebenen Verweilzeit des Gemischs im Mischer, jeweils unter Berücksichtigung des zulässigen Druckverlustes über die Mischstrecke orientieren. Bei einer temperierten Ausführung des Mischers kann auch die geforderte Wärmeübertragungsleistung ein Kriterium für die Auslegung sein. Sofern z.B. in möglichst kurzer Zeit eine besonders intensive Vermischung niedrig viskoser Komponenten erreicht werden soll, ist es in der Regel vorteilhaft, möglichst kleine Teilkanäle zu wählen und deren parallele Anzahl innerhalb der Mischstufen dem gewünschten Gemischdurchsatz und Druckabfall anzupassen. Die Anzahl der Mischstufen kann in diesem Fall aufgrund der bereits in den ersten Mischstufen erreichten guten Gemischhomogenität relativ klein gehalten werden, wobei sie die Zahl der parallelen Teilkanäle innerhalb der Mischstufen vorzugsweise um nicht mehr als einen Faktor von ca. 0,3 unterschreiten sollte, um eine hinreichende Toleranz des Mischers gegenüber Fehlverteilungen im Mischungsverhältnis und Störungen innerhalb der Mischstrecke zu gewährleisten. Insbesondere beim Übergang zu hohen Gemischdurchsätzen, hohen Viskositäten oder bei Einsatz oder Erzeugung partikelhaltiger Gemische kann - ggf. zusätzlich zur Erhöhung der Zahl paralleler Teilkanäle - eine Vergrößerung deren transversaler Abmessungen erforderlich sein. Die damit verbundene Verringerung der erreichten Mischqualität gegenüber einem Mischer mit kleineren Kanaldimensionen kann in gewissen Grenzen durch die Erhöhung der Anzahl der Mischstufen kompensiert werden. Beide Maßnahmen führen naturgemäß - insbesondere in Kombination - zu einer Erhöhung des Fluidvolumens der Mischstrecke und damit zu einer Vergrößerung der Verweilzeit des Gemischs darin. Die Vermischungsgeschwindigkeit wird folglich hierdurch herabgesetzt. Auf Basis dieser Überlegungen liegen in der Praxis sinnvolle transversale Teilkanalabmessungen bevorzugt im Bereich zwischen 0,1 und 20 mm, besonders bevorzugt im Bereich von 0,5 mm bis 5 mm.

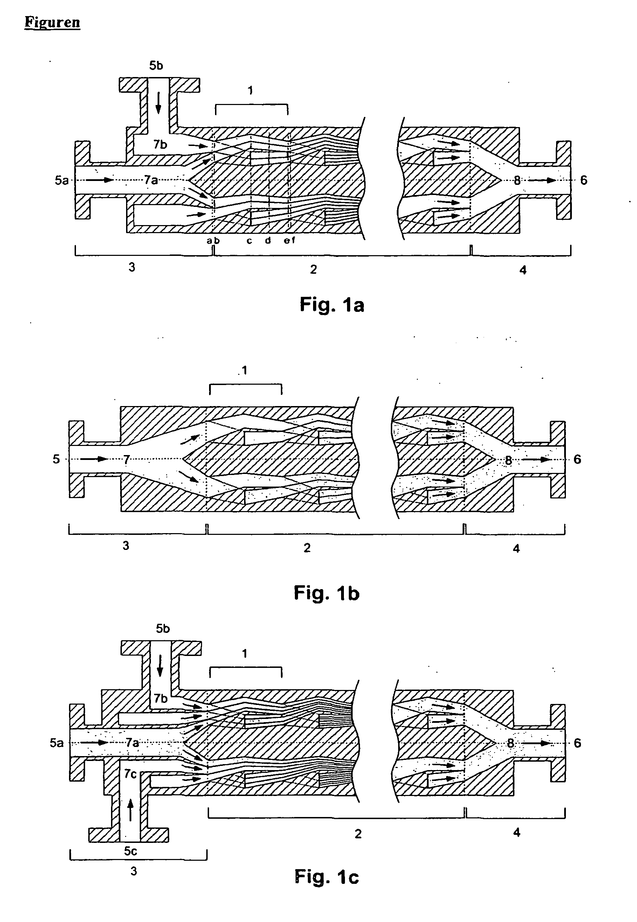

Der erfindungsgemäße Statikmischer kann für unterschiedliche verfahrenstechnische Aufgaben vorteilhaft genutzt werden. Beispielsweise kann in ihm ein Gemisch aus mehreren zunächst getrennt vorliegenden fluiden Komponenten erzeugt werden. In diesem Falle ist der eigentlichen Mischstrecke bevorzugt ein Mischerkopf voranzuschalten, welcher die zu vermischenden Komponenten in einen radial geschichteten Ringstrom überführt. Diese Ausführungsform ist für den Fall von zwei unterschiedlichen Medien in Fig. 1a skizziert. Besonders bevorzugt entsprechen die geometrischen Abmessungen (Innen- und Außendurchmesser) des diesen Ringstrom führenden Ringkanals am Austritt des Mischerkopfes denen des Ringkanals am Eintritt der ersten Mischstufe der Mischstrecke des erfindungsgemäßen Mischers. Im Vergleich zu den meisten bekannten Statikmischerkonzepten ermöglicht der erfindungsgemäße Mischer dabei aufgrund der besonders definierten wiederholten Teilung und Wiedervereinigung des geschichteten Eingangsstroms auch eine besonders definierte simultane Vermischung von mehr als zwei fluiden Medien (siehe Fig. 1c). Diese Möglichkeit kann z.B. dann besonders vorteilhaft genutzt werden, wenn drei oder mehr reaktive fluide Komponenten miteinander vermischt werden sollen, welche untereinander bei jeweils paarweiser Vermischung unerwünschte Nebenprodukte bilden.

Im Falle, dass ein höher viskoses Medium mit einem deutlich niedriger viskosen Medium vermischt werden soll, kann es ferner vorteilhaft sein, einen erfindungsgemäßen Mischer für drei Eingangsströme zu verwenden, den Strom des niedriger viskosen Mediums in zwei in etwa gleich große Ströme aufzuteilen und diese mit dem höher viskosen Strom so in den Mischer einzuspeisen, dass am Anfang der Mischstrecke ein Ringstrom erzeugt wird, bei welchem das niedriger viskose Medium jeweils den inneren und den äußeren Ring bilden, während das höher viskose Medium im mittleren Ring strömt.

In einem anderen Fall der Verwendung des erfindungsgemäßen Mischers liegt das Gemisch bereits in vorvermischter Form vor. In diesem Fall kann der Mischerkopf vereinfacht ausgeführt werden und reduziert sich vorzugsweise auf einen Einlassstutzen zur Mischstrecke (siehe Fig. 1b). Besonders bevorzugt wird der Kern der Mischstrecke dabei einlassseitig zusätzlich mit einem Kegeldiffusor versehen, um eine Druckverlustarme Ausbildung der Ringströmung am Einlass der ersten Mischstufe zu fördern. Der Mischer kann in diesem Fall, d.h. bei Beströmung mit einem vorgemischten Prozessmedium, z.B. vorteilhaft zur weiteren Homogenisierung des Gemischs eingesetzt werden. Sofern die Gemischkomponenten im jeweils vorliegenden Zustand und Mischungsverhältnis ineinander löslich sind, kann hierdurch in sehr kurzer Zeit und mit geringem Energieaufwand ein homogenes Gemisch erzeugt werden. Ist eine vollständige Löslichkeit nicht gegeben, können mit dem Mischer z.B. vorteilhaft Emulsionen erzeugt bzw. in ihrer Struktur vorübergehend aufrechterhalten werden, da durch die wiederholte Stromteilung und -umlenkung (insbesondere bei höheren Strömungsgeschwindigkeiten) hohe Schergradienten innerhalb der Mischstrecke auf das Gemisch wirken. In jedem Fall wird bei der Durchströmung des erfindungsgemäßen Mischers der Stofftransport im Gemisch sowohl innerhalb homogener Phasen als auch zwischen nicht mischbaren Phasen stark beschleunigt.

Aufgrund der intensiven Quervermischung des Gemischstroms beim Durchlaufen des erfindungsgemäßen Statikmischers ist hierin neben dem intensivierten Stofftransport auch ein besonders guter Wärmeaustausch zwischen dem Gemischstrom und den Wänden der Mischstrecke gegeben. Über die Variation der Anzahl paralleler Teilkanäle innerhalb der Mischstufen bei konstant gehaltenem Teilkanalquerschnitt und somit festem Verhältnis von Oberfläche zu Volumen- steht dabei eine Möglichkeit zur Durchsatzskalierung des Mischers bei gleichbleibend gutem Wärmeaustausch zur Verfügung, welche bei der Skalierung der bekannten Statikmischer über den Querschnitt der Mischstrecke in der Regel nicht gegeben ist. Der Mischer eignet sich somit auch besonders gut zur Temperierung des Gemischs während der Vermischung. So kann beispielsweise die Temperatur des Gemischs gezielt gehalten, während der Vermischung erhöht oder abgesenkt werden, z.B. um die Viskosität des Gemischs oder einzelner Komponenten einzustellen, Stoffaustauschvorgänge zu beeinflussen, die Löslichkeit einzelner Gemischbestandteile gezielt zu variieren oder die Geschwindigkeit chemischer, physikalischer oder biologischer Vorgänge im Gemisch zu steuern.

Eine temperierte Ausführung des Mischers kann ferner besonders vorteilhaft insbesondere zur Durchführung exothermer oder endothermer chemischer Reaktionen eingesetzt werden. Innerhalb des Mischers können dabei eine oder mehrere Stufen des Prozesses in Folge oder teilweise ineinander übergehend parallel ablaufen: Die Bildung des Reaktionsgemischs aus den Reaktanden, die Einstellung der Reaktionstemperatur (z.B. zur Einleitung der Reaktion) und/oder die Führung der Reaktion oder eines Teils davon unter definierten und homogenen Temperatur- und Konzentrationsbedingungen.

Die Temperierung des Mischers kann beispielsweise vorteilhaft durch in oder um die Außenwände der Mischstrecke sowie ggf. in deren Kern eingebrachte Kanäle realisiert werden, welche im Betrieb von einem fluiden Temperiermedium, wie es dem Fachmann auf dem Gebiet der Wärmetauschertechnik bekannt ist, durchströmt werden. Alternativ ist eine elektrische Beheizung des Mischermantels (und ggf. des Kerns) z.B. durch Widerstandsheizelemente oder auf induktivem Wege möglich. Auch andere Methoden der Beheizung oder Kühlung, wie z.B. Bestrahlung mit Infrarotlicht oder Mikrowellen, der Einsatz von Peltierelementen oder die Durchströmung von Temperierkanälen mit exotherm oder endotherm reaktiven Gemischen können in gewissen Einsatzfällen des Mischers vorteilhaft sein.

Als Konstruktionsmaterialien für den Aufbau des erfindungsgemäßen Mischers kommen grundsätzlich alle für die jeweilige Anwendung (z.B. hinsichtlich Festigkeit, chemischer und thermischer Beständigkeit, Bearbeitbarkeit, Wärmeleitfähigkeit, Wärmeausdehnung etc.) geeigneten Materialien infrage. Bei Anwendungen mit hohen Anforderungen an die mechanische, thermische und chemische Beständigkeit, wie sie häufig im Bereich der chemischen Verfahrenstechnik auftreten, kommen bevorzugt korrosionsbeständige Metalle wie z.B. Edelstähle, Nickelbasis-Legierungen, Titan(-legierungen) oder Refraktärmetalle sowie Keramiken (z.B. Aluminiumoxid, Zirkonoxid, Siliziumnitrid oder Siliziumcarbid), Fluorkunststoffe (z.B. PTFE, PFA etc.) und Fluorelastomere (z.B. FFKM, FKM -vorwiegend als Dichtungsmaterialien) zum Einsatz. Bei geringen Anforderungen an die chemische Beständigkeit und mäßigen Anforderungen an die thermische und mechanische Stabilität kann auch der Einsatz von preiswerteren und in der Regel leichter zu bearbeitenden NE-Metallen wie z.B. Aluminium-, Kupfer- oder Messingwerkstoffen vorteilhaft sein. Sind die Anforderungen an die Druck- und Temperaturstabilität noch geringer, lassen sich auch Kunststoffe - u.a. aufgrund ihrer guten Bearbeitbarkeit - bevorzugt für den Aufbau eines erfindungsgemäßen Mischers einsetzen.

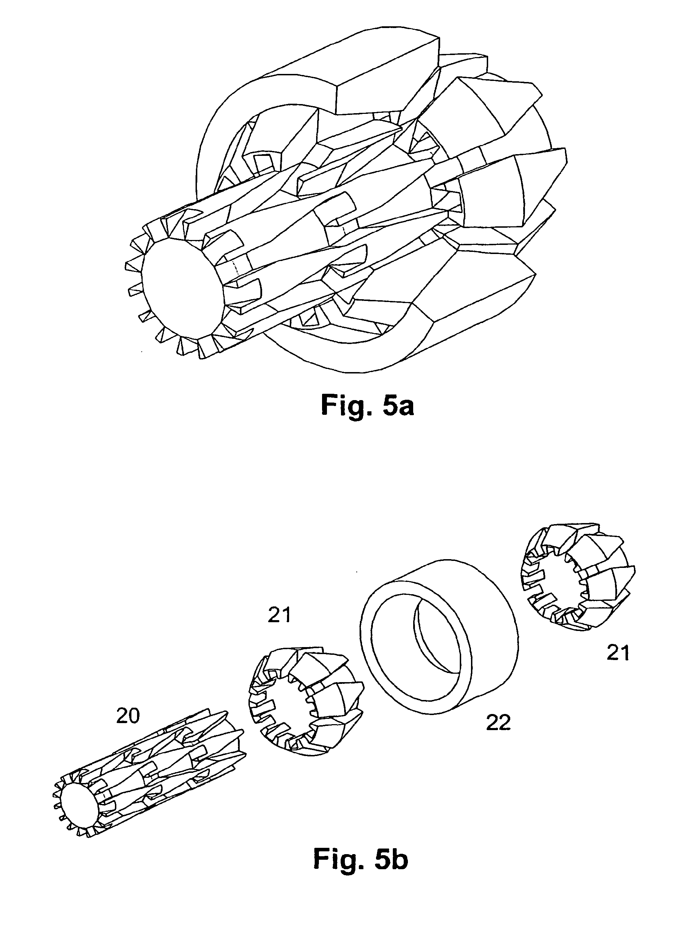

Eine bevorzugte Ausführungsform des Mischers bzw. seiner Mischstrecke setzt sich aus einem konus- oder zylinderförmigen Kernelement (20) mit darin eingebrachten Kanalstrukturen, einer ersten Anordnung von mehreren über diesen Kern geschobenen, hintereinander angeordneten, mit im Wesentlichen axial verlaufenden Kanalstrukturen versehenen inneren Ringelementen (21) und einer zweiten hierzu koaxialen Anordnung von mit der ersten Anordnung auf Stoß überlappenden äußeren Ringelementen (22) zusammen, welche von einen druck- und fluiddichten, rohrförmigen Mantel umschlossen werden (s. Fig. 5). Die Herstellung der die Mischstrecke definierenden Komponenten dieser Ausführungsform lässt sich vollständig und besonders vorteilhaft durch spanabhebende (z.B. Drehen, Bohren, Fräsen, Schleifen) und/oder abformende (z.B. Spritzguss, Pulverspritzguss oder Feinguss) Fertigungsverfahren realisieren. In gewissen Fällen kann die zusätzliche Bearbeitung durch funkenerosive Methoden sinnvoll oder notwendig werden. Als weiterer Vorzug dieser Ausführungsform stellt sich die vollständige Zerlegbarkeit des Mischers dar, in dem Sinne, dass alle das Prozessfluid berührenden Oberflächen zu Inspektions- und Reinigungszwecken mit geringem Aufwand reversibel zugänglich gemacht werden können.

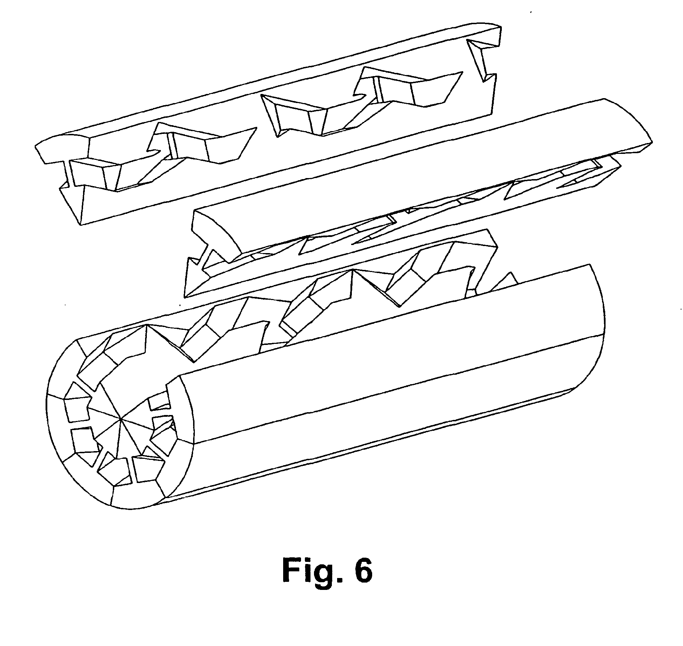

Eine weitere bevorzugte Ausführungsform des Mischers bzw. seiner Mischstrecke ist aus keilförmigen Zylindersegmenten aufgebaut, welche um eine gemeinsame Achse angeordnet einen Zylinder (ggf. auch Hohlzylinder) ergeben. In die Seitenflächen der Zylindersegmente sind Materialschnitte (Vertiefungen) eingebracht, welche im zylinderförmigen Zusammenbau der Segmente eine erfindungsgemäße Mischstruktur ergeben (Figur 6). Hierbei ist die Verwendung wenigstens zweier unterschiedlich strukturierter Zylindersegmenttypen erforderlich, welche im Zusammenbau in jeweils alternierender Anordnung zum Einsatz kommen.

Durch die wiederholte Teilung und Umschichtung des - ggf. eingangsseitig geschichteten - Prozessfluidstroms entlang der Mischstrecke können über eine leicht zu realisierende Anzahl von Mischstufen (z.B. 5 bis 20) bis zum Mischerausgang theoretische Dicken der einzelnen Fluidschichten im Bereich weniger 0,01 mm oder noch darunter realisiert werden. Bei entsprechender Auslegung erreicht ein erfindungsgemäßer Mischer somit in vielen Fällen annähernd die Leistungsfähigkeit eines Multilaminations-Mikromischers mit vergleichbaren Druckabfall- und Durchflusswerten. Im Vergleich zu diesem weist der erfindungsgemäße Statikmischer jedoch um gut einen Faktor 5 bis 20 größere minimale Abmessungen der durchströmten Kanäle auf und ist folglich wesentlich weniger anfällig gegenüber Ablagerungen und Verstopfungen. So können mit einem erfindungsgemäßen Statikmischer u.a. auch vorteilhaft Medien verarbeitet werden, welche feste oder anderweitig nicht-fluide Bestandteile enthalten (z.B. Suspensionen, Slurries, Gele, Aufschwämmungen von Flocken etc.) oder in denen im Verlauf der Vermischung z.B. infolge chemischer Reaktionen solche nicht-fluiden Bestandteile (ggf. auch temporär) entstehen. So lässt sich ein erfindungsgemäßer Statikmischer beispielsweise besonders vorteilhaft zur Herstellung von Polymeren oder Polymergemischen, zur Vermischung wenigstens zweier fluider Medien, von denen wenigstens eines eine Suspension ist, oder zur Erzeugung von Suspensionen durch Fällung einsetzen.

Die Erfindung wird anhand der folgenden Figuren beispielhaft erläutert ohne sie jedoch darauf zu beschränken.

Es zeigen:
- Figur 1a bis c: den grundsätzlichen Aufbau eines erfindungsgemäßen Mischers für verschiedene Anzahlen von zu vermischenden fluiden Medien im Längsschnitt,
- Figur 2a bis f: Querschnitte eines erfindungsgemäßen Mischers an unterschiedlichen Positionen innerhalb einer Mischstufe,
- Figur 3a bis f: Querschnitte eines erfindungsgemäßen Mischers mit alternativer Führung der Teilkanäle an unterschiedlichen Positionen innerhalb einer Mischstufe,
- Figur 4a bis i: Querschnitte eines erfindungsgemäßen Mischers mit einer weiteren alternativen Führung der Teilkanäle an unterschiedlichen Positionen innerhalb einer Mischstufe, wobei der azimutale Versatz der Teilkanäle in aufeinander folgenden Mischstufen in entgegen gesetzter Richtung erfolgt,
- Figur 5a und b: eine perspektivische Darstellung einer möglichen Ausführungsform der Mischstrecke eines erfindungsgemäßen Mischers (Ausschnitt) in zusammengebauter und explodierter Form und
- Figur 6: eine perspektivische Darstellung einer weiteren möglichen Ausführungsform der Mischstrecke eines erfindungsgemäßen Mischers (Ausschnitt) in teilweise explodierter Form
- Figur 7: eine weitere mögliche Ausführungsform einer Mischstufe der Mischstrake eines Mischers.

Figur 1a) zeigt den Längsschnitt eines erfindungsgemäßen Statikmischer in einer Ausführung, wie sie vorzugsweise zur Vermischung zweier unterschiedlicher fluider Medien verwendet wird. Der Mischstrecke (2), bestehend aus einer Abfolge sequenziell durchströmter Mischstufen (1), ist hierbei ein Mischerkopf (3) vorgeschaltet, welcher die beiden über die Einlässe (5a/b) getrennt zugeführten zu vermischenden Medien (7a/b) in Form eines radial geschichteten Ringstroms in die Mischstrecke einspeist. Das Gemisch (8) verlässt den Mischer über das am Ausgang (6) der Mischstrecke angebrachte Auslasssegment (4).

Figur 1b) zeigt den Längsschnitt eines erfindungsgemäßen Statikmischers in einer weiteren Ausführung, die bevorzugt für die weitere Vermischung bzw. Homogenisierung eines bereits vorvermischten Produktstroms (7) eingesetzt werden kann. Diese Ausführung unterscheidet sich von der in Fig. 1 gezeigten im Wesentlichen durch die Form des Mischerkopfes, welcher in diesem Fall nur mit einem Fluideinlass (5) versehen ist.

Figur 1c zeigt den Längsschnitt eines erfindungsgemäßen Statikmischers in einer dritten Ausführung, die vorzugsweise der Vermischung dreier getrennter Fluidströme dient. Hierbei kann es sich beispielsweise um drei unterschiedliche Medien handeln, die simultan zu einem einheitlichen Gemisch verarbeitet werden sollen. Eine vorteilhafte Verwendung findet eine derartige Ausführung des Mischers jedoch auch bei der Vermischung von nur zwei unterschiedlichen Medien, z.B. wenn diese in besonders großem Massenstromverhältnis zugeführt werden oder stark unterschiedliche Viskositäten aufweisen. In diesen Fällen ist es vorteilhaft über die Einlässe (5b) und (5c) die Gemischkomponente mit dem größeren Massenstrom bzw. der niedrigeren Viskosität zuzuführen und die andere Gemischkomponente über den Fluideinlass (5a) einzuspeisen.

Figur 2 illustriert die Fluidführung innerhalb einer Mischstufe eines erfindungsgemäßen Mischers anhand einer Sequenz von in Durchströmungsrichtung aufeinander folgenden Querschnitten: Der Gemischstrom tritt in Form einer - im Idealfall radial geschichteten - Ringströmung (10) in die Mischstufe ein (Fig. 2a). Im nächsten Schritt geht diese Ringströmung in eine (gerade) Anzahl von Teilkanälen (11) über, wird dabei also azimutal segmentiert (Fig. 2b). Im weiteren Verlauf erfahren die Teilkanäle einen abwechselnd entgegen gesetzten radialen Versatz (Fig. 2b nach 2c), bis benachbarte Teilkanäle in radialer Richtung nicht mehr miteinander überlappen. Anschließend erfahren die Teilkanäle eine azimutale Streckung, bis ursprünglich benachbarte Teilkanäle einander in azimutaler Richtung wieder weitgehend überlappen (Fig. 2c nach 2d). Als Zwischenstadium beim Übergang in die folgende Mischstufe kann wiederum eine unsegmentierte Ringströmung erreicht werden (Fig. 2e) oder die Teilsegmentierung nach der azimutalen Streckung (Fig. 2d) geht vorzugsweise unmittelbar in die Teilkanalanordnung der folgenden Mischstufe (Fig. 2f - dann um 1/16 Drehung rotiert) über. In den meisten Anwendungen wird der azimutalen Streckung der Teilkanäle, welche den Übergang der radial versetzten Teilkanäle in eine (ggf. segmentierte) Ringströmung darstellt (Fig. 2c nach 2d) vorzugsweise eine simultane radiale Stauchung der Teilkanäle überlagert, um den Gesamtströmungsquerschnitt entlang der Mischstufe annähernd konstant zu halten und die Abmessungen des Ringkanals am Übergang der Mischstufen bei allen (oder zumindest mehreren aufeinander folgenden) Mischstufen gleich zu halten.

In Figur 3 ist eine alternative Fluidführung innerhalb einer Mischstufe eines erfindungsgemäßen Mischers anhand einer Sequenz von in Durchströmungsrichtung aufeinander folgenden Querschnitten dargestellt. Wiederum erfolgt zunächst eine azimutale Segmentierung des eintretenden Ringstroms und ein abwechselnder radialer Versatz der so entstehenden Teilkanäle (Fig. 3a und b). Anschließend werden jedoch jeweils benachbarte Teilkanäle in entgegen gesetzter azimutaler Richtung so versetzt, dass sie zumindest annähernd vollständig azimutal überlappen (Fig. 2c). Anschließend an diesen Versatz, oder alternativ auch parallel hierzu, werden die Teilkanäle soweit in azimutaler Richtung gestreckt, dass zum Ende der Mischstufe hin wieder eine (ggf. segmentierte) Ringströmung erreicht wird (Fig. 2d bis f).

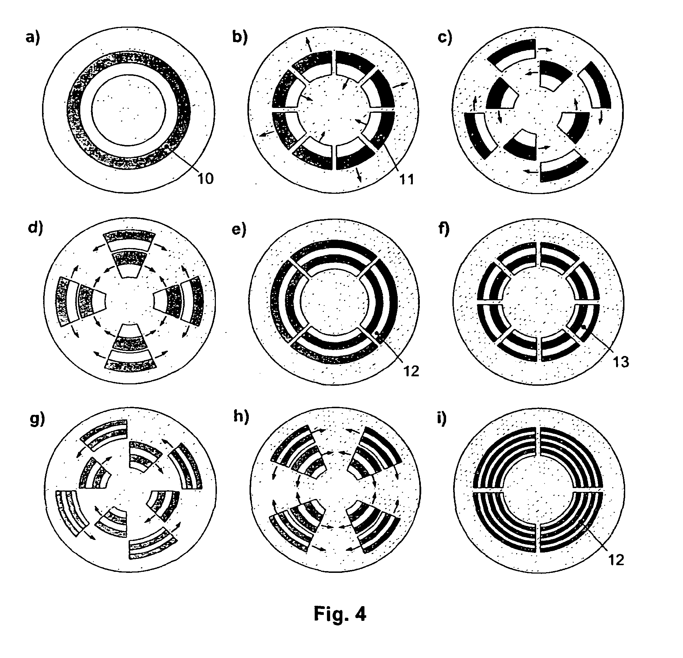

Figur 4 illustriert im Wesentlichen dieselbe Fluidführung innerhalb einer Mischstufe eines erfindungsgemäßen Mischers, stellt jedoch ergänzend auch die Abfolge der Teilkanalverläufe in der darauf folgenden Mischstufe (Fig. 4f bis i) dar. Insbesondere erfolgt in dieser folgenden Mischstufe der azimutale Versatz radial gegeneinander verschobener benachbarter Teilkanäle in entgegen gesetzter Richtung zur vorherigen Mischstufe. Diese Form der Fluidführung, bei der die Richtung des azimutalen Versatzes innerhalb aufeinander folgender Mischstufen jeweils alterniert, ist besonders bevorzugt, da hierdurch entlang der Mischstrecke eine besonders gute Quervermischung zwischen den Teilkanälen erfolgt.

Figur 5 zeigt eine mögliche Ausführungsform der Mischstrecke (Ausschnitt) eines erfindungsgemäßen Mischers. Diese setzt sich aus einem zylinderförmigen, auf seiner Außenfläche mit Kanalstrukturen versehenen Kern (20) sowie im Wechsel darüber geschobenen inneren (21) und äußeren (22) Ringsegmenten zusammen, welche in der Kombination die gewünschte Realisierung der Teilkanalführung ergibt (im gezeigten Beispiel die in Fig. 2 skizzierte).

Figur 6 zeigt eine perspektivische Darstellung einer weiteren möglichen Ausführungsform der Mischstrecke eines erfindungsgemäßen Mischers (Ausschnitt). Diese ist aus zwei unterschiedlichen Typen von keilförmigen Zylindersegmenten zusammengesetzt, in deren Seitenflächen spezifische Kanalstrukturelemente eingebracht sind. Bei alternierender Anordnung der Zylindersegmente zu einem vollständigen Zylinder verbinden sich die Kanalstrukturelemente der einzelnen Segmente zur Mischstruktur einer erfindungsgemäßen Mischstrecke.

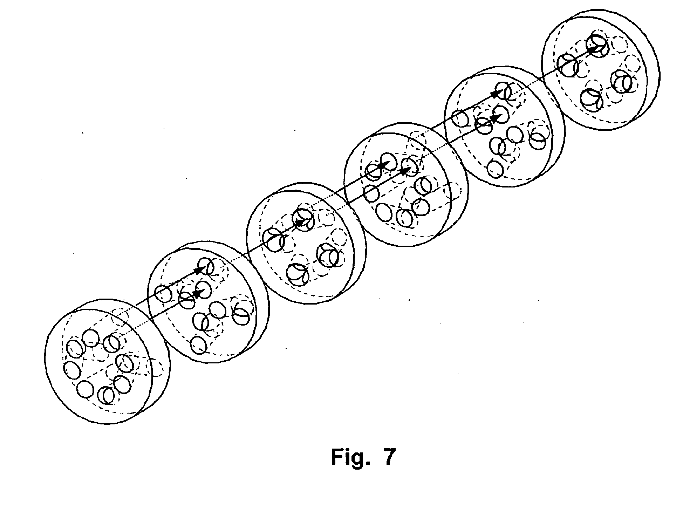

In Figur 7 ist eine weitere mögliche Ausführungsform einer Mischstufe der Mischstrecke eines erfindungsgemäßen Mischers dargestellt. Hierbei sind die Teilkanäle abschnittsweise als durchgehende Öffnungen oder Bohrungen in verschiedene, bevorzugt runde, Scheiben eingearbeitet. Durch ausgerichtetes Stapeln der Scheiben bilden die Öffnungen oder Bohrungen ein zusammenhängendes System von Kanälen einer erfindungsgemäßen Mischstrecke. Der Scheibenstapel wird zum Gebrauch in ein geeignetes, z.B. rohrförmiges Gehäuse eingeschoben (hier nicht gezeigt), welches ggf. einen Mischerkopf und ein Auslasssegment zur Zu- und Abführung der Prozessfluide enthält.

### Bezugszeichenliste:

- 1.: Mischstufe
- 2.: Mischstrecke
- 3.: Mischerkopf
- 4.: Auslasssegment
- 5.: Einlass für Vorgemisch
- 5a, 5b, 5c.: Einlässe für Gemischkomponenten
- 6.: Mischerauslass
- 7.: Vorgemisch
- 7a ,7b, 7c.: Gemischkomponenten (zu vermischende Medien)
- 8.: Gemisch
- 10.: Ringkanal am Eintritt zur Mischstufe
- 11.: Teilkanal
- 12.: (Unsegmentierter oder teilsegmentierter) Ringkanal am Austritt der Mischstufe/Eintritt zur folgenden Mischstufe
- 13.: Segmentierter Ringkanal (am Eintritt zur folgenden Mischstufe)
- 20.: Kernelement
- 21.: Inneres Ringelement
- 22.: Äußeres Ringelement

## Patentansprüche

1. Statischer Mischer, umfassend eine vom Mischgut sequenziell durchströmte koaxiale Anordnung von wenigstens zwei Mischstufen (1), jede einzelne davon enthaltend einen ggf. azimutal segmentierten Ringkanal (10), wobei dieser Ringkanal (10) in jeder Mischstufe jeweils in eine gerade Anzahl annähernd gleich großer Teilkanäle (11) übergeht, welche entlang der Strömungsrichtung zunächst einen alternierenden radialen Versatz durchlaufen bis benachbarte Teilkanäle (11) radial nicht mehr überlappen, dann durch azimutale Verschiebung und/oder Verbreiterung zu radial ineinander geschachtelten, ggf. azimutal segmentierten Ringkanälen (12) ausgezogen werden, welche schließlich am Ende der Mischstufe durch radiale Verschmelzung wieder zu einem ggf. azimutal segmentierten Ringkanal (13) zusammen laufen, **dadurch gekennzeichnet, dass** die Überführung der radial alternierenden Teilkanäle (12) in ggf. azimutal segmentierte Ringkanäle (13) durch azimutale Verschiebung und anschließende oder simultane azimutale Verbreiterung erfolgt.

2. Statischer Mischer nach Anspruch 1, **dadurch gekennzeichnet, dass** der ersten Mischstufe (1) eine Vorrichtung (3) zur Einspeisung von wenigstens zwei fluiden Medien (7) vorgeschaltet ist, die die einzuspeisenden Medien (7) in einem radial geschichteten Ringstrom überführt und diesen in den Eintrittsringkanal (10) der ersten Mischstufe (1) einführt.

3. Statischer Mischer nach einem der Ansprüche 1 oder 2, **dadurch gekennzeichnet, dass** der Ringkanal (10) bereits am Ein- und Austritt jeder Mischstufe (1) in eine gerade Anzahl von Teilkanälen (11) azimutal segmentiert ist und dass diese Segmentierung in der jeweils folgenden Mischstufe (1) ohne Stufen fortgeführt wird.

4. Statischer Mischer nach einem der Ansprüche 1 bis 3, **dadurch gekennzeichnet, dass** die Anzahl der Mischstufen (1) dem 0,3- bis 0,7-fachen der Anzahl der Teilkanäle (11) innerhalb einer Mischstufe entspricht.

5. Statischer Mischer nach einem der Ansprüche 1 bis 4, **dadurch gekennzeichnet, dass** der hydraulische Durchmesser der Teilkanäle (11) in den Mischstufen (1) nicht größer als 2 mm ist.

6. Statischer Mischer nach einem der Ansprüche 1 bis 5, **dadurch gekennzeichnet, dass** der statische Mischer mit einer Vorrichtung zur Temperierung der hindurch strömenden Medien ausgestattet ist.

7. Statischer Mischer nach einem der Ansprüche 1 bis 6, **dadurch gekennzeichnet, dass** dessen Mischstrecke (2) aus einem konus- oder zylinderförmigen Kernelement (20) mit darin eingebrachten Kanalstrukturen, mehreren über diesen Kern geschobenen, z. T. mit im Wesentlichen axial verlaufenden Kanalstrukturen versehenen, einander überlappenden Ringelementen (21, 22) und einem umschießenden druck- und fluiddichten, rohrförmigen Mantel aufgebaut ist.

8. Statischer Mischer nach einem der Ansprüche 1 bis 7, **dadurch gekennzeichnet, dass** dessen Mischstrecke (2) aus einer geraden Anzahl von keilförmigen Zylindersegmenten zusammengesetzt ist, in deren Seitenflächen Kanalstrukturabschnitte eingebracht, welche im zusammengebauten Zustand die erfindungsgemäße Anordnung und Abfolge von Mischkanälen ergeben.

9. Verwendung eines Statischen Mischers nach einem der Ansprüche 1 bis 8 zur Herstellung von Polymeren oder Polymergemischen.

10. Verwendung eines Statischen Mischers nach einem der Ansprüche 1 bis 8 zur Vermischung wenigstens zweier fluider Medien, von denen wenigstens eines eine Suspension ist.

11. Verwendung eines Statischen Mischers nach einem der Ansprüche 1 bis 8 zur Erzeugung von Suspensionen durch Fällung.

## Claims

1. Static mixer, comprising a coaxial arrangement of at least two mixing stages (1) flowed through sequentially by the material to be mixed, each individual one of which containing a, possibly azimuthally segmented, annular channel (10), wherein, in every mixing stage, this annular channel (10) in each case goes over into an even number of partial channels (11) of approximately the same size, which along the direction of flow initially go through an alternating radial offset until neighboring partial channels (11) no longer radially overlap, then are drawn out by azimuthal displacement and/or widening into radially interleaved, possibly azimuthally segmented, annular channels (12), which finally run together again at the end of the mixing stage, by radial fusion, to a, possibly azimuthally segmented, annular channel (13), **characterized in that** the transformation of the radially alternating partial channels (12) into possibly azimuthally segmented annular channels (13) takes place by azimuthal displacement and subsequent or simultaneous azimuthal widening.

2. Static mixer according to Claim 1, **characterized in that** the first mixing stage (1) is preceded by a device (3) for feeding in at least two fluidic media (7), which transforms the media (7) to be fed in into a radially layered annular stream and introduces the latter into the annular inlet channel (10) of the first mixing stage (1).

3. Static mixer according to either of Claims 1 and 2, **characterized in that** the annular channel (10) is already azimuthally segmented into an even number of partial channels (11) at the inlet and outlet of each mixing stage (1) and **in that** this segmentation is continued in the respectively following mixing stage (1) without steps.

4. Static mixer according to one of Claims 1 to 3, **characterized in that** the number of mixing stages (1) corresponds to 0.3 to 0.7 of the number of partial channels (11) within a mixing stage.

5. Static mixer according to one of Claims 1 to 4, **characterized in that** the hydraulic diameter of the partial channels (11) in the mixing stages (1) is not greater than 2 mm.

6. Static mixer according to one of Claims 1 to 5, **characterized in that** the static mixer is equipped with a device for controlling the temperature of the media flowing through.

7. Static mixer according to one of Claims 1 to 6, **characterized in that** the mixing section (2) thereof is made up of a conical or cylindrical core element (20) with channel structures introduced therein, a number of annular elements (21, 22) overlapping one another, pushed over this core, some with substantially axially extending channel structures, and an enclosing pressure- and fluid-tight, annular shell.

8. Static mixer according to one of Claims 1 to 7, **characterized in that** the mixing section (2) thereof is made up of an even number of wedge-shaped cylinder segments, in the side areas of which channel structure portions which in the assembled state produce the arrangement and sequence of mixing channels according to the invention have been introduced.

9. Use of a static mixer according to one of Claims 1 to 8 for producing polymers or polymer mixtures.

10. Use of a static mixer according to one of Claims 1 to 8 for mixing at least two fluidic media, at least one of which is a suspension.

11. Use of a static mixer according to one of Claims 1 to 8 for producing suspensions by precipitation.

## Revendications

1. Mélangeur statique, comprenant un agencement coaxial d'au moins deux étages de mélange (1), parcouru en séquence par la matière à mélanger, chacun de ceux-ci comportant un canal annulaire (10), éventuellement à segmentation azimutale, dans lequel ce canal annulaire (10) se prolonge respectivement dans chaque étage de mélange en un nombre pair de canaux partiels (11) de grandeur sensiblement égale, qui traversent d'abord dans la direction d'écoulement un décalage radial alterné jusqu'à ce que des canaux partiels voisins (11) ne se recouvrent plus radialement, qui sont ensuite étirés, par déplacement et/ou élargissement azimutal, en canaux annulaires (12) radialement emboîtés les uns dans les autres, éventuellement à segmentation azimutale, qui se rejoignent finalement de nouveau, à la fin de l'étage de mélange, par fusion radiale, en un canal annulaire (13), éventuellement à segmentation azimutale, **caractérisé en ce que** la transformation des canaux annulaires radialement alternés (12) en canaux annulaires (13) éventuellement à segmentation azimutale est effectuée par déplacement azimutal et élargissement azimutal consécutif ou simultané.

2. Mélangeur statique selon la revendication 1, **caractérisé en ce que** le premier étage de mélange (1) est précédé par un dispositif (3) destiné à l'apport d'au moins deux milieux fluides (7), qui transforme les milieux à apporter (7) en un flux annulaire radialement stratifié et introduit celui-ci dans le canal annulaire d'entrée (10) du premier étage de mélange (1).

3. Mélangeur statique selon l'une des revendications 1 ou 2, **caractérisé en ce que** le canal annulaire (10) présente, déjà à l'entrée et à la sortie de chaque étage de mélange (1), une segmentation azimutale en un nombre pair de canaux partiels (11) et **en ce que** cette segmentation est poursuivie dans discontinuer dans l'étage de mélange respectivement suivant (1).

4. Mélangeur statique selon l'une quelconque des revendications 1 à 3, **caractérisé en ce que** le nombre des étages de mélange (1) correspond à 0,3 - 0,7 fois le nombre des canaux partiels (11) à l'intérieur d'un étage de mélange.

5. Mélangeur statique selon l'une quelconque des revendications 1 à 4, **caractérisé en ce que** le diamètre hydraulique des canaux partiels (11) dans les étages de mélange (1) n'est pas plus grand que 2 mm.

6. Mélangeur statique selon l'une quelconque des revendications 1 à 5, **caractérisé en ce que** le mélangeur statique est équipé d'un dispositif destiné à tempérer les milieux qui le traversent.

7. Mélangeur statique selon l'une quelconque des revendications 1 à 6, **caractérisé en ce que** sa zone de mélange (2) est composée d'un élément de noyau (20) en forme de cône ou de cylindre avec des structures de canaux pratiquées dans celui-ci, avec plusieurs éléments annulaires (21, 22) engagés sur ce noyau, munis en partie de structures de canaux s'étendant essentiellement axialement et se recouvrant mutuellement, et avec une enveloppe tubulaire l'entourant de façon étanche à la pression et au fluide.

8. Mélangeur statique selon l'une quelconque des revendications 1 à 7, **caractérisé en ce que** sa zone de mélange (2) est composée d'un nombre pair de segments de cylindre en forme de coins, dans les faces latérales desquels sont ménagées des parties de structures de canaux qui, à l'état assemblé, produisent l'agencement et la succession de canaux de mélange conformes à l'invention.

9. Utilisation d'un mélangeur statique selon l'une quelconque des revendications 1 à 8, pour la fabrication de polymères ou de mélanges de polymères.

10. Utilisation d'un mélangeur statique selon l'une quelconque des revendications 1 à 8, pour le mélange d'au moins deux milieux fluides, dont au moins un est une suspension.

11. Utilisation d'un mélangeur statique selon l'une quelconque des revendications 1 à 8, pour la production de suspensions par précipitation.
